# EUROPEAN PATENT SPECIFICATION

(11) **EP 0 437 928 B1**
(45) Date of publication and mention of the grant of the patent: **14.04.1999**
(21) Application number: 90312691.0
(22) Date of filing: 21.11.1990
(51) Int. Cl.: G06F 12/08

(54) **Memory management in a multi-processor system**
Speicherverwaltung in einer Mehrprozessoranordnung
Gestion de mémoire dans un système multiprocesseur

(30) Priority: 18.01.1990 GB 9001156
(43) Date of publication of application: 24.07.1991
(73) Proprietor: INTERNATIONAL COMPUTERS LIMITED, Putney, London, SW15 1SW (GB)
(72) Inventor: Holt, Nicholas Peter, Hadfield via Hyde, Cheshire SK14 7ET (GB); Smith, Laurence Robin, Mossley, Ashton under Lyne 0L6 9AH (GB)
(74) Representative: Guyatt, Derek Charles

(56) References cited:
- EP-A- 0 090 575
- EP-A- 0 319 148
- IBM TECHNICAL DISCLOSURE BULLETIN vol. 17, no. 9, February 1975, NEW YORK, US pages 2606 - 2610; A.H.DUKE: 'Storage Allocation Mechanism'

## Description

### Background to the invention

This invention relates to a multi-processor data processing system. More specifically, the invention is concerned with a data processing system comprising a plurality of processing elements, each of which includes a processing unit and a local main memory.

In one proposed system of this kind, when a processing element requires to access a data item, it first attempts to access the item from its own local main memory. If the page containing the required data item is not available in the local main memory, the processing element sends a page copy request to the processing element that holds the item. A copy of the required page is then returned to the requesting processing element, and is loaded into the local memory so that the access can proceed.

Such a system is disclosed in EP 319 148 A.

Page copying has a number of attractions. In particular, a conventional memory management unit (MMU) may be used in a simple off-the-shelf design, to detect whether a page is available in a particular processing element. However, a problem with page copying is that, in general, copying a page takes a considerable time. For example, copying a 4 Kbyte page with a data transfer rate of 20 Mbyte/second takes 410 microseconds. This latency is usually unacceptable, and complex scheduling must be employed to ensure that the processing element is not idle for this length of time.

An object of the present invention is to provide a way of overcoming this problem while still retaining the advantages of page copying.

### Summary of the invention

According to the invention there is provided a data processing system as defined in claim 1 and a method of operating a data processing system as defined in claim 2.

It can be seen that, since the sectors are smaller than the pages they do not take as long to copy. For example, a 128 byte sector will take only 6.5 microseconds to copy at a rate of 20 Mbyte/second. However, the local memory in each processing element is still allocated in page units, which allows a conventional paged memory management scheme to be used.

### Brief description of the drawings

Figure 1 is a block diagram of a multi-processor data processing system.

Figure 2 shows one of the processing elements of the system in more detail.

Figure 3 is a flow chart illustrating the operation of the system.

### Description of an embodiment of the invention

One multi-processor data processing system in accordance with the invention will now be described by way of example with reference to the accompanying drawings.

### Overview of system

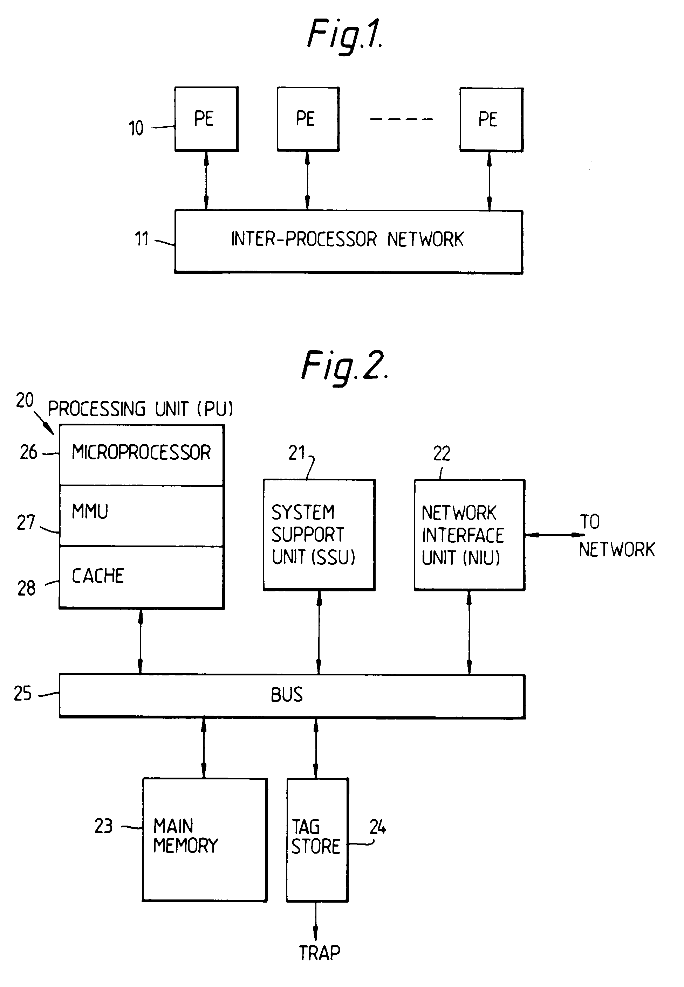

Referring to Figure 1, the system comprises a plurality of processing elements (PE) 10, interconnected by an inter-processor network 11. The network 11 may, for example, comprise a known multi-stage switching network such as a delta network.

In operation the workload of the system is shared among the processing elements. The processing elements can communicate with each other by sending messages over the network.

### Processing element

Referring now to Figure 2, each processing element includes a processing unit (PU) 20, a system support unit (SSU) 21, a network interface unit (NIU) 22, a main memory 23, and a tag store 24. These units are all connected together by an internal bus 25.

The processing unit 20 performs the main data processing tasks within the processing element. The processing unit comprises a conventional microprocessor 26, memory management unit (MMU) 27, and cache store 28.

The MMU performs address translation for the processing unit, using conventional segment and page tables. Each segment/page table entry indicates whether the corresponding segment/page is allocated in the local memory and, if so, the physical address in local memory at which the segment/page is based; if not, the entry indicates which of the processing elements owns the particular segment/page, i.e. which holds the master copy of that segment or page in its local main memory.

The system support unit 21 is a microprocessor unit which is dedicated to certain support functions within the processing element, such as managing communications with the other processing elements.

The network interface unit 22 provides the necessary interface between the internal bus 25 and the inter-processor network 11. The NIU 22 includes a direct memory access (DMA) unit for directly accessing the main memory 23.

The main memory 23 is a 64 Mbyte random access memory (RAM), which is organised into pages of 4 Kbytes each. Each page is subdivided into 32 sectors, each sector containing 128 bytes.

The tag store 24 holds a set of tag registers, one for each page in the main memory. Each tag register holds 32 tag bits, one for each sector in the page. Each tag bit indicates whether or not the corresponding sector is valid in the main memory. Whenever a data is read out of the main memory, the corresponding tag bit is automatically read out of the tag store, and if the tag bit is set (=1) a TRAP signal is produced. The TRAP signal is fed to the processing unit 20, as an interrupt signal.

The tag store can also be addressed in a memory-mapped mode, which allows each tag register (i.e. the tag bits associated with a particular page) to be accessed individually and to be modified as required.

### Operation

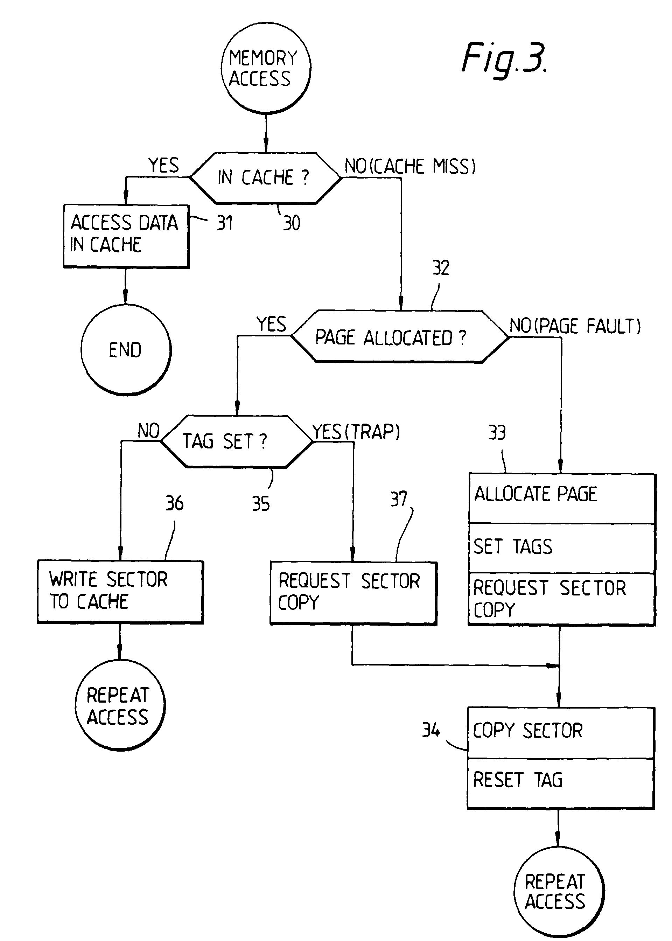

The operation of the system will now be described with reference to Figure 3
(30) When the processing unit 20 in one of the processing elements requires to read or write a data item, it first checks whether or not that item is available in the cache 28.
(31) If the data is available in the cache (cache hit), the data item is accessed directly from the cache, for reading or writing. In the case of the write, the data item is also written to the local main memory 23.
(32) If the required data item is not in the cache (cache miss), the MMU 27 is accessed to determine whether the page containing the data item has been allocated in the local main memory 23. If not, a PAGE FAULT signal is produced.
(33) The PAGE FAULT signal interrupts the processing unit 26, and activates a Kernel program to perform the following actions. The Kernel allocates a page in the main memory 23, ready to receive the data, and sets the page tables to indicate that this page is valid (even though it does not, as yet, contain any valid data). The Kernel also accesses the tag register of the page, using a memory-mapped register write, and sets all the bits in that register to "1", to indicate that, although the page has been allocated, none of the sectors are yet valid. The kernel also sends a sector copy request to the SSU 21, requesting it to supply a copy of the sector containing the required data item.
   While the processing unit 26 is waiting for the sector to be copied, it may remain in an idle state or the kernal may schedule another process for execution.
(34) The SSU 21 sends a sector copy request message over the network 11, by way of the NIU 22, to the processing element that owns the page in question, as indicated by the segment table entry. The SSU then waits for the sector to be returned. When the sector returns, the SSU is informed by the NIU, which then sets up the NIU to access the main memory 23, by means of a direct memory access. The NIU writes the sector into the appropriate location of the allocated page. At the same time, the SSU accesses the tag register for this page, using a memory-mapped register access, and resets the tag bit of this sector to "0", so as to indicate that it is now valid in the main memory.
   The SSU notifies the kernal to indicate that the sector copy request has been completed.
   The data access can be repeated and this time the required data item will be found in main memory.
(35) If it is found that the page containing the required data item has already been allocated in the main memory, the sector of this page is read, along with its corresponding tag bit. If the tag bit is set, a TRAP interrupt will occur.
(36) If no TRAP is produced, the sector is read into the cache 28. The access can now be repeated, and this time the data will be found in the cache.
(37) If, however a TRAP occurs, the processing unit 20 is interrupted, and starts to execute a TRAP HANDLER routine. This sends a sector copy request to the SSU 21, requesting it to get a copy of the required sector. The SSU will then proceed to get the sector and to load it into the main memory as described above.

### Summary

It can be seen that, whenever a processing element makes an access to a data item which is held in the memory of a remote processing element, a page is allocated in the local main memory. However, the whole of the page is not copied, only the sector containing the requested item. Upon subsequent access to another sector in this page, a trap occurs which causes the sector to be copied from the remote processing element.

Hence, it can be seen that data is copied from the remote memory a single sector at a time, which takes considerably less time than copying a whole page. The resulting reduction in latency has considerable benefit for overall throughput in those applications for which copying of data from remote stores is critical.

## Claims

1. A data processing system comprising a plurality of data processing elements (10) each of which comprises a processing unit (20), a local memory (23) for holding data organised in pages, a memory management unit (27) for performing address translations, and remote copying means (21,22,34) for copying data, on demand, from a remote one of said processing elements into the local memory (23),
characterised in that:
(a) each said page is divided into a plurality of sectors;
(b) each local memory (23) has a plurality of tags (24) associated with it, for tagging each of the sectors in that local memory to indicate whether or not those sectors are valid in the local memory;
(c) each processing unit includes means (33) for setting all the tags associated with a newly-allocated page, to indicate that the sectors in that page are not yet valid in the local memory; and
(d) said remote copying means includes means (34) for copying individual sectors from remote processing elements on demand, and for setting the tags of the individual copied sectors to indicate that those sectors are now valid in the local memory.

2. A method of operating a data processing system comprising a plurality of data processing elements (10) each of which comprises a processing unit (20), a local memory (23) for holding data organised in pages, each page being divided into a plurality of sectors, a memory management unit (27) for performing address translations, and remote copying means (21,22,34) for copying data, on demand, from a remote one of said processing elements into the local memory (23), the method comprising the steps:
(a) accessing the memory management unit (27) in one of the processing elements to check whether a page containing a required data item has already been allocated in the local memory of the processing element;
(b) if a page has not yet been allocated, allocating a page in the local memory, setting tags to indicate that none of the sectors in that page are valid in the local memory, and generating a request for a copy of the sector containing the required data item;
(c) if a page has already been allocated, checking the tag for the sector containing the required data item to determine whether that sector is valid and then, if the sector is valid, accessing the required item from that sector or else, if the sector is not valid, generating a request for a copy of the sector containing the required data item;
(d) processing a request for a copy of a sector by using said remote copying means to read that sector from a remote one of said processing units, writing the sector into an allocated page in local memory, and then resetting the tag for that sector to indicate that this sector is now valid in the local memory.

## Patentansprüche

1. Datenverarbeitungssystem mit einer Mehrzahl von Datenverarabeitungselementen (10), von denen jedes eine Verarbeitungseinheit (20), einen lokalen Speicher (23) zum Speichern von in Seiten organisierten Daten, eine Speicher-Management-Einheit (27) zur Durchführung von Adressenübersetzungen, und eine Fernkopiervorrichtung (21, 22, 34) zum Kopieren von Daten nach Bedarf aus einem entfernten der Verarbeitungselemente in den lokalen Speicher (23) aufweist,
**dadurch gekennzeichnet**, daß
(a) jede Seite in eine Mehrzahl von Sektoren unterteilt ist,
(b) jedem lokalen Speicher (23) eine Mehrzahl von Markierungen (24) zugeordnet sind, die jeden der Sektoren im lokalen Speicher markieren, um anzuzeigen, ob die Sektoren in dem lokalen Speicher gültig sind oder nicht,
(c) jede Verarbeitungseinheit eine Vorrichtung (33) aufweist, um alle einer neu zugeteilten Seite zugeordneten Markierungen einzustellen, damit angezeigt wird, daß die Sektoren in dieser Seite im lokalen Speicher noch nicht gültig sind, und
(d) die Fernkopiervorrichtung eine Vorrichtung (34) zum bedarfsweisen Kopieren individueller Sektoren aus entfernten Verarbeitungselementen und zum Einstellen der Markierungen der individuell kopierten Sektoren aufweist, um anzuzeigen, daß diese Sektoren nun in dem lokalen Speicher gültig sind.

2. Verfahen zum Betreiben eines Datenverarbeitungssystems mit einer Mehrzahl von Datenverarbeitungselementen (10), deren jedes aufweist eine Verarbeitungseinheit (20), einen lokalen Speicher (23) zum Speichern von in Seiten organisierten Daten, wobei jede Seite in eine Mehrzahl von Sektoren unterteilt ist, eine Speicher-Management-Einheit (27) zum Durchführen von Adressenübersetzungen, und eine Fernkopiervorrichtung (21, 22, 34) zum Kopieren von Daten bei Bedarf aus einem entfernten der Verarbeitungselemente in den lokalen Speicher (23),
dadurch gekennzeichnet, daß das Verfahren folgende Schritte umfaßt:
(a) einen Zugriff zu der Speicher-Management-Einheit (27) in einem der Verarbeitungselemente durchzuführen, um zu prüfen, ob eine Seite, die einen gewünschten Datenausdruck enthält, bereits in dem lokalen Speicher des Vearbeitungselementes zugeteilt worden ist,
(b) wenn die Seite noch nicht zugeteilt worden ist, eine Seite in dem lokalen Speicher zuzuteilen und Markierungen zu setzen, um anzuzeigen, daß keine der Sektoren in dieser Seite in dem lokalen Speicher gültig sind, und eine Anfrage nach einer Kopie des den gewünschten Datenausdruck enthaltenden Sektors zu stellen,
(c) wenn eine Seite bereits zugeteilt worden ist, die Markierung auf den den gewünschten Datenausdruck enthaltenden Sektor zu prüfen, um festzulegen, ob dieser Sektor gültig ist, und dann, wenn der Sektor gültig ist, einen Zugriff auf den gewünschten Ausdruck aus diesem Sektor vorzunehmen, oder, wenn der Sektor nicht gültig ist, eine Anfrage nach einer Kopie des den gewünschten Datenausdruck enthaltenden Sektors zu stellen,
(d) eine Anfrage nach einer Kopie eines Sektors durch Verwendung der Fernkopiervorrichtung zu verarbeiten, um diesen Sektor aus einer entfernt gelegenen Verarbeitungseinheit auszulesen, den Sektor in eine zugeteilte Seite im lokalen Speicher einzuschreiben, und dann die Markierung für diesen Sektor rückzusetzen, um anzuzeigen, daß dieser Sektor nunmehr in dem lokalen Speicher gültig ist.

## Revendications

1. Système de traitement de données comprenant une pluralité d'éléments de traitement de données (10) dont chacun comprend une unité de traitement (20), une mémoire locale (23) pour maintenir des données organisées en pages, une unité de gestion de mémoire (27) pour réaliser des traductions d'adresse, et un moyen de copie distant (21, 22, 34) pour copier des données, sur demande, à partir d'un desdits éléments de traitement distants dans la mémoire locale (23),
caractérisé en ce que :
(a) chaque dite page est divisée en une pluralité de secteurs ;
(b) chaque mémoire locale (23) a une pluralité d'étiquettes (24) associées à elle, pour étiqueter chacun des secteurs dans cette mémoire locale pour indiquer si oui ou non ces secteurs sont valides dans la mémoire locale ;
(c) chaque unité de traitement comprend un moyen (33) pour régler toutes les étiquettes associées avec une page nouvellement allouée, pour indiquer que les secteurs dans cette page ne sont pas encore valides dans la mémoire locale ; et
(d) ledit moyen de copie distant comprend un moyen (34) pour copier des secteurs individuels à partir des éléments de traitement distant sur demande, et pour mettre les étiquettes des secteurs copiés individuels pour indiquer que ces secteurs sont maintenant valides dans la mémoire locale.

2. Procédé pour faire fonctionner un système de traitement de données comprenant une pluralité d'éléments de traitement de données (10) dont chacun comprend une unité de traitement (20), une mémoire locale (23) pour maintenir des données organisées dans des pages, chaque page étant divisée en une pluralité de secteurs, une unité de gestion de mémoire (27) pour réaliser des traductions d'adresse, et un moyen de copie distant (21, 22, 34) pour copier des données, sur demande, à partir d'un desdits éléments de traitement distants dans la mémoire locale (23), le procédé comprenant les étapes de :
(a) accession à l'unité de gestion de mémoire (27) dans un des éléments de traitement pour contrôler si une page contenant un élément de données requis a déjà été allouée dans la mémoire locale de l'élément de traitement ;
(b) si une page n'a pas encore été allouée, l'allocation d'une page dans la mémoire locale, l'établissement des étiquettes pour indiquer qu'aucun des secteurs dans cette page sont valides dans la mémoire locale, et génération d'une demande pour une copie du secteur contenant l'élément de données requis ;
(c) si une page a déjà été allouée, contrôle de l'étiquette pour le secteur contenant l'élément de données requis pour déterminer si ce secteur est valide et puis, si le secteur est valide, accès à l'élément requis à partir de ce secteur ou autre, si le secteur n'est pas valide, génération d'une demande pour une copie du secteur contenant l'élément de données requis ;
(d) traitement d'une demande pour une copie d'un secteur en utilisant ledit moyen de copie distant pour lire ce secteur à partir d'une desdites unités de traitement distantes, écrire le secteur dans une page allouée dans une mémoire locale, et puis réinitialisation de l'étiquette pour ce secteur pour indiquer que ce secteur est maintenant valide dans la mémoire locale.
